# EUROPÄISCHE PATENTANMELDUNG

(11) **EP 3 828 153 A1**
(43) Veröffentlichungstag der Anmeldung: **02.06.2021**
(21) Anmeldenummer: 19212571.4
(22) Anmeldetag: 29.11.2019
(51) Int. Cl.: C04B 24/26, C04B 28/02, C08F 220/28, C08G 65/24, C08G 65/26, C04B 103/40

(54) **VERZWEIGTE COPOLYMERE ALS DISPERGIERMITTEL FÜR MINERALISCHE BINDEMITTEL**

(71) Anmelder: SIKA TECHNOLOGY AG, 6340 Baar (CH)
(72) Erfinder: Weidmann, Jürg, 8404 Winterthur (CH); Zimmermann, Jörg, 8400 Winterthur (CH); Frunz, Lukas, 8305 Dietlikon (CH)
(74) Vertreter: Sika Patent Attorneys

(57) **Zusammenfassung**

Die Erfindung betrifft die Verwendung verzweigter Copolymere als Dispergiermittel von mineralischen Bindemittel, wobei die Copolymere aufgebaut sind aus (1) mindestens einem olefinisch ungesättigten Carbonsäure-Monomer (2) mindestens einem olefinisch ungesättigten Makromonomer der allgemeinen Struktur (I) 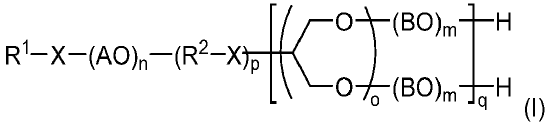 wobei R¹ ein olefinisch ungesättigter Rest mit 2 - 10 C-Atomen, welcher ggf. durch Sauerstoff und/oder Stickstoff substituiert sein kann, bevorzugt Vinyl, Allyl, Methallyl, Vinyloxybutyl, Isoprenyl, Acryloyl und/oder Methacryloyl, ist,
X = O oder NH ist,
A jeweils unabhängig voneinander C1-C10 Alkylen, bevorzugt Ethylen, Propylen und/oder Butylen sind,
R² = C1-C16 Alkyl ist,
B jeweils unabhängig voneinander C1-C10 Alkylen, bevorzugt Ethylen, Propylen und/oder Butylen sind,
m jeweils unabhängig voneinander eine ganze Zahl im Bereich von 0 - 350, bevorzugt 2 - 200, besonders bevorzugt 5 - 150, im Speziellen 7-30 sind,
n eine ganze Zahl im Bereich von 0 - 100, bevorzugt 1 - 100, besonders bevorzugt 2 - 75, ganz besonders bevorzugt 5 - 55 ist,
p gleich 0 oder 1, bevorzugt 0 ist,
o eine ganze Zahl im Bereich von 1 - 50, bevorzugt 3 - 40, besonders bevorzugt 6 - 30, im Speziellen 8 - 20 ist, und
q eine ganze Zahl im Bereich von 1 - 10 ist.

## Beschreibung

### Technisches Gebiet

Die Erfindung betrifft die Verwendung verzweigter Copolymere als Dispergiermittel von mineralischen Bindemittel. Ein weiterer Aspekt der Erfindung betrifft eine mineralische Bindemittelzusammensetzung sowie einen ausgehärteten Formkörper enthaltend das verzweigte Copolymer.

### Hintergrund

Dispergiermittel oder Fliessmittel werden in der Bauindustrie als Verflüssiger oder wasserreduzierende Mittel für mineralische Bindemittel und/oder mineralische Bindemittelzusammensetzungen, wie z.B. Beton, Mörtel, Zemente, Gipse und Kalk, eingesetzt. Als Dispergiermittel werden im Allgemeinen organische Polymere eingesetzt, welche dem Anmachwasser zugesetzt oder als Feststoff dem Bindemittel bzw. der Bindemittelzusammensetzung beigefügt werden. Dadurch können sowohl die Konsistenz der Bindemittelzusammensetzung während der Verarbeitung als auch die Eigenschaften in ausgehärtetem Zustand in vorteilhafter Weise verändert werden. Die Wahl und Dosierung eines geeigneten Dispergiermittels hängt insbesondere von der spezifischen Zusammensetzung, der Verarbeitungstechnik oder dem Einsatzzweck des Bindemittels bzw. der Bindemittelzusammensetzung ab.

In der Praxis werden häufig Hochleistungsverflüssiger in Form von Polycarboxylatethern (PCE) als Dispergiermittel für mineralische Bindemittel eingesetzt, beispielsweise um das Fliessverhalten von mineralischen Bindemittelzusammensetzungen zu verbessern. Zwar zeigen herkömmliche PCE normalerweise eine starke Wasserreduktion und verringern die Fliessgrenze von mineralischen Bindemittelzusammensetzungen, haben aber keinen oder nur geringen Einfluss auf die Viskosität.

Die EP 2 454 296 beschreibt Copolymere welche aus verzweigten Makromonomeren aufgebaut sind. Die Verwendung solcher Copolymere als Verdicker, beispielsweise in Wasch- und Reinigungsmitteln wird ebenfalls beschrieben.

Die EP 2 964 586 beschreibt Copolymere als Dispergiermittel für mineralische Bindemittel, wobei die Copolymere Einheiten enthalten, die abgeleitet sind aus (i) einer olefinisch ungesättigten Säure und (ii) einem olefinisch ungesättigten, verzweigten Polyethermakromonomer mit einem Alkyl-Terminus. Diese Dispergiermittel haben den Nachteil, dass sie unter Verwendung von Epichlorhydrin hergestellt werden, welches schwer zu handhaben ist. Ausserdem führen diese Copolymere oft zu einem unerwünschten zusätzlichen Lufteintrag.

Es besteht also weiterhin ein Bedarf an verbesserten Dispergiermitteln für mineralische Bindemittel, welche die Nachteile des bekannten Stands der Technik überwinden können.

### Zusammenfassung der Erfindung

Aufgabe der vorliegenden Erfindung ist es, ein Verfahren zur Verfügung zu stellen, welches es ermöglicht, mineralische Bindemittel effizient zu dispergieren und so die Viskosität und/oder das Fliessverhalten mineralischer Bindemittelzusammensetzungen zu verbessern, insbesondere ohne zusätzlichen Lufteintrag.

Überraschenderweise wurde gefunden, dass diese Aufgabe gelöst werden kann durch die Verwendung von Copolymeren als Dispergiermittel für mineralische Bindemittel, wobei die Copolymere aufgebaut sind aus
(1) mindestens einem olefinisch ungesättigten Carbonsäure-Monomer
(2) mindestens einem olefinisch ungesättigten Makromonomer der allgemeinen Struktur (I) 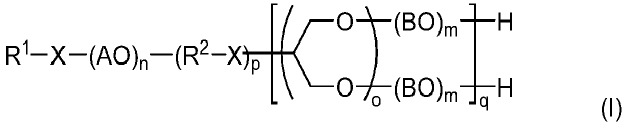
   wobei R¹ ein olefinisch ungesättigter Rest mit 2 - 10 C-Atomen, welcher ggf. durch Sauerstoff du/oder Stickstoff substituiert sein kann, bevorzugt Vinyl, Allyl, Methallyl, Vinyloxybutyl, Isoprenyl, Acryloyl und/oder Methacryloyl, ist,
   X = O oder NH ist,
   A jeweils unabhängig voneinander C1-C10 Alkylen, bevorzugt Ethylen, Propylen und/oder Butylen sind,
   R² = C1-C16 Alkyl ist,
   B jeweils unabhängig voneinander C1-C10 Alkylen, bevorzugt Ethylen, Propylen und/oder Butylen sind,
   m jeweils unabhängig voneinander eine ganze Zahl im Bereich von 0 - 350, bevorzugt 2 - 200, besonders bevorzugt 5 - 150, im Speziellen 7 - 30 sind,
   n eine ganze Zahl im Bereich von 0 - 100, bevorzugt 1 - 100, besonders bevorzugt 2 - 75, ganz besonders bevorzugt 5 - 55 ist,
   p gleich 0 oder 1, bevorzugt 0 ist,
   o eine ganze Zahl im Bereich von 1 - 50, bevorzugt 3 - 40, besonders bevorzugt 6 - 30, im Speziellen 8 - 20 ist, und
   q eine ganze Zahl im Bereich von 1 - 10 ist.

Ein wesentlicher Vorteil erfindungsgemässer Copolymere ist das Vorliegen einer Vielzahl von Alkylenoxid-basierten Seitenketten innerhalb einer einzelnen Makromonomer-Einheit. Diese Vielzahl wird durch die Einführung von Verzweigungen erreicht. Dadurch besitzt eine einzelne Makromonomereinheit einen grösseren sterischen Anspruch als Makromonomereinheiten mit rein linearen Seitenketten, wie sie beispielsweise in klassischen PCE vorliegen. Dies führt zu einer verminderten Wechselwirkung mit Seitenketten anderer Makromonomereinheiten. Auf diese Weise kann ein erfindungsgemässes Copolymer gleichzeitig als Dispergiermittel für mineralische Bindemittel und zur Herabsetzung der Viskosität mineralischer Bindemittelzusammensetzungen verwendet werden, was einen wesentlichen Vorteil darstellt.

Weitere Vorteile der Verwendung erfindungsgemässer Copolymere als Dispergiermittel in mineralischen Bindemittelzusammensetzungen sind weniger Entmischung bzw. Separation der Bestandteile der mineralischen Bindemittelzusammensetzung, sowie weniger unerwünschter Lufteintrag.

Schliesslich zeichnen sich die Makromonomere, welche zum Aufbau erfindungsgemässer Copolymere benötigt werden durch eine einfache Synthese aus, welche bevorzugt ohne die Verwendung von Epichlorhydrin auskommt. Dies ist von Vorteil, da Epichlorhydrin aufgrund seiner Toxizität und Karzinogenität problematisch ist.

Weitere Aspekte der Erfindung sind Gegenstand anderer unabhängiger Ansprüche. Besonders bevorzugte Ausführungsformen der Erfindung sind Gegenstand der abhängigen Ansprüche.

### Wege zur Ausführung der Erfindung

Unter dem Begriff "Dispergiermittel" versteht man vorliegend ein Mittel zur Verbesserung der Mischbarkeit mineralischer Bindemittel mit einem Lösungsmittel, insbesondere mit Wasser. Dispergiermittel im Sinne der vorliegenden Erfindung führen insbesondere dazu, dass Mischungen mineralischer Bindemittel oder Bindemittelzusammensetzungen mit Wasser eine grössere Fliessfähigkeit und/oder eine geringere Entmischung aufweisen, als dieselben Mischungen ohne das Dispergiermittel. Im Speziellen wird die Fliessfähigkeit von Mischungen mineralischer Bindemittel oder Bindemittelzusammensetzungen mit Wasser durch Zugabe eines Dispergiermittels erhöht. Ein Mass für die Fliessfähigkeit ist dabei insbesondere das Ausbreitmass gemessen nach Norm DIN EN 12350-5. Alternativ bewirkt ein Dispergiermittel eine Verringerung des Wasseranspruches eines mineralischen Bindemittels zur Einstellung derselben Fliessfähigkeit wie eine Mischung des mineralischen Bindemittels mit Wasser aber ohne Zusatz von Dispergiermittel. Die erfindungsgemässen Copolymere wirken als Dispergiermittel und verbessern die Fliessfähigkeit einer damit modifizierten mineralischen Bindemittelzusammensetzung. Die erfindungsgemässen Copolymere reduzieren darüber hinaus auch die Viskosität einer damit modifizierten mineralischen Bindemittelzusammensetzung. Ein Mass für die Viskosität ist dabei insbesondere die Trichterauslaufzeit gemessen nach Norm DIN EN 12350-9.

Ein erster Aspekt der Erfindung betrifft die Verwendung von Copolymeren als Dispergiermittel für mineralische Bindemittel, wobei die Copolymere aufgebaut sind aus
(1) mindestens einem olefinisch ungesättigten Carbonsäure-Monomer
(2) mindestens einem olefinisch ungesättigten Makromonomer der allgemeinen Struktur (I) 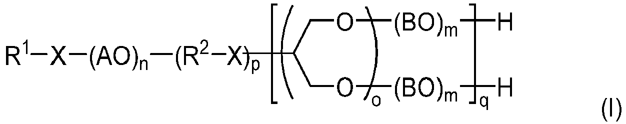
   wobei R¹ ein olefinisch ungesättigter Rest mit 2 - 10 C-Atomen, welcher ggf. durch Sauerstoff und/oder Stickstoff substituiert sein kann, bevorzugt Vinyl, Allyl, Methallyl, Vinyloxybutyl, Isoprenyl, Acryloyl und/oder Methacryloyl, ist,
   X = O oder NH ist,
   A jeweils unabhängig voneinander C1-C10 Alkylen, bevorzugt Ethylen, Propylen und/oder Butylen sind,
   R² = C1-C16 Alkyl ist,
   B jeweils unabhängig voneinander C1-C10 Alkylen, bevorzugt Ethylen, Propylen und/oder Butylen sind,
   m jeweils unabhängig voneinander eine ganze Zahl im Bereich von 0 - 350, bevorzugt 2 - 200, besonders bevorzugt 5 - 150, im Speziellen 7 - 30 sind,
   n eine ganze Zahl im Bereich von 0 - 100, bevorzugt 1 - 100, besonders bevorzugt 2 - 75, ganz besonders bevorzugt 5 - 55 ist,
   p gleich 0 oder 1, bevorzugt 0 ist,
   o eine ganze Zahl im Bereich von 1 - 50, bevorzugt 3 - 40, besonders bevorzugt 6 - 30, im Speziellen 8 - 20 ist, und
   q eine ganze Zahl im Bereich von 1 - 10 ist.

Wenn q = 1 ist, so ist o eine ganze Zahl im Bereich von 1 - 50. Wenn q > 1 ist, so sind alle o jeweils unabhängig voneinander eine ganze Zahl im Bereich von 1 - 50.

Es ist besonders bevorzugt, dass p = 0 ist, wenn n > 0 ist.

Die Anzahl linearer Struktureinheiten (BO)ₘ in der allgemein Struktur (I) ist abhängig von o und q. Die Anzahl der Struktureinheiten (BO)ₘ ist gleich o x q +1.

Zur besseren Verdeutlichung werden im Folgenden einige Beispielstrukturen abgeleitet aus der allgemeinen Struktur (I) mit definierten Kombinationen von o und q dargestellt. Diese Beispielstrukturen sollen in keiner Weise als einschränkend für die erfindungsgemässen Makromonomere gelten.

Für den Fall o = 2 und q = 1 ergeben sich Makromonomere der folgenden allgemeinen Struktur (la) 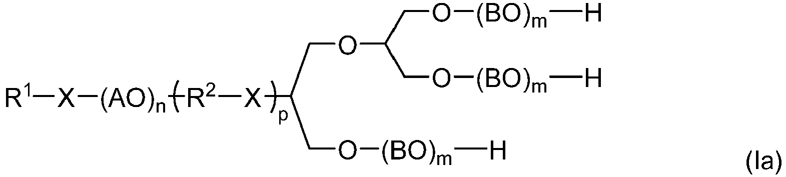 Für den Fall o = 3 und q = 1 ergeben sich Makromonomere der folgenden allgemeinen Struktur (Ib) 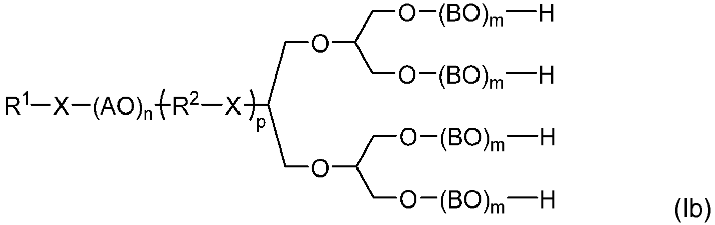 Für den Fall o = 1 und q = 2 ergeben sich Makromonomere der folgenden allgemeinen Struktur (Ic) 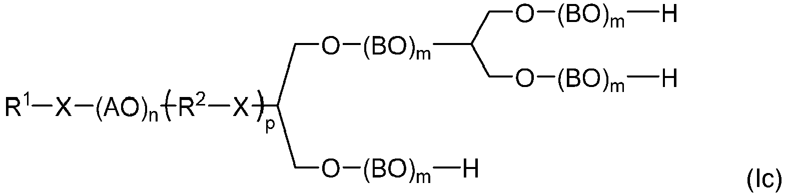 Für den Fall o = 2 und q = 3 ergeben sich Makromonomere der folgenden allgemeinen Struktur (Id)

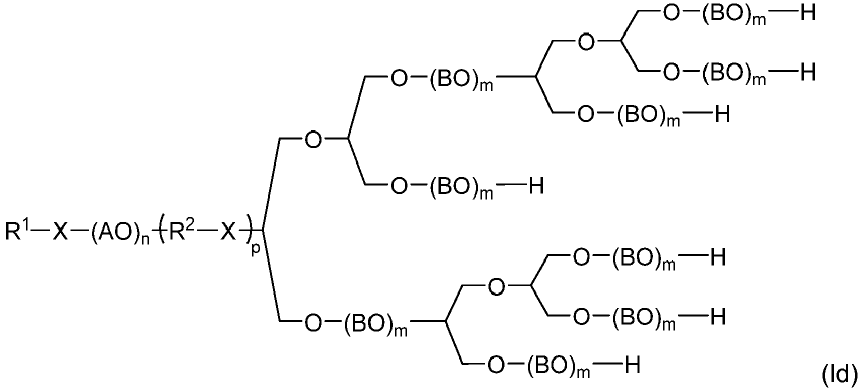

Dem Fachmann ist klar, dass die erfindungsgemässen Makromonomere unterschiedliche Regioisomere enthalten können. Dabei handelt es sich um Regioisomere, die entstehen wenn bei der Herstellung der Makromonomere unter Verwendung von beispielsweise Glycidol der Oxiran-Ring des Glycidols über die verschiedenen C-Atome, gemäss einer der chemischen Reaktionsgleichungen a) bzw. b) wie im Folgenden dargestellt geöffnet wird.

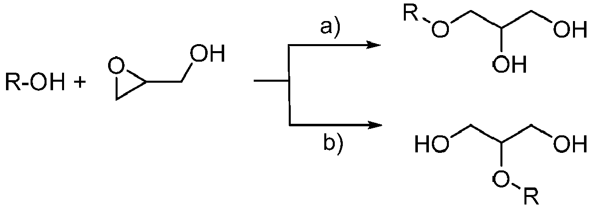

Zur Vereinfachung wird in der vorliegenden Erfindung stets nur das Regioisomer b) abgebildet. Gemeint sind aber stets beide Regioisomere a) und b) bzw. deren Gemische.

Die Strukturelemente (AO) sowie (BO) der allgemeinen Struktur (I) sind Polyalkylenoxidketten. Bevorzugt beträgt ein Anteil an Ethylenoxideinheiten in den Polyalkylenoxid-Ketten (AO)ₘ und (BO)ₘ, bezogen auf sämtliche vorhandenen Alkylenoxid-Einheiten AO und BO, mehr als 90 Mol-%, insbesondere mehr als 95 Mol-%, bevorzugt mehr als 98 Mol-%, im Speziellen 100 Mol-% beträgt. In einer besonderen Ausführungsform weisen die Polyalkylenoxid-Seitenketten keine hydrophoben Gruppen, insbesondere keine Alkylenoxide mit drei oder mehr Kohlenstoffatomen, auf. Ein hoher Anteil an Ethylenoxideinheiten oder ein geringer Gehalt an Alkylenoxiden mit drei oder mehr Kohlenstoffatomen reduziert die Gefahr von unerwünschtem Lufteintrag.

Das durchschnittliche gewichtsgemittelte Molekulargewicht (Mw) wird vorliegend durch Gel-Permeations-Chromatographie (GPC) mit Polyethylenglycol (PEG) als Standard bestimmt. Diese Technik ist dem Fachmann an sich bekannt. Erfindungsgemässe Copolymere können eine Molmasse M_{w} im Bereich von 250 - 1'000'000 g/mol haben. Bei bevorzugten Copolymeren sind die Parameter n, m, o und p der allgemeinen Struktur (I) so gewählt, dass die mittlere Molmasse M_{w} der Copolymere im Bereich von 1'000 - 1'000'000, besonders bevorzugt 1'500 - 500'000, ganz besonders bevorzugt 2'000 - 100'000, insbesondere 3'000 - 75'000 oder 3'000 - 50'000 liegt.

Unter dem Ausdruck "mineralisches Bindemittel" ist vorliegend ein Bindemittel zu verstehen, welches in Anwesenheit von Wasser in einer Hydratationsreaktion zu festen Hydraten oder Hydratphasen reagiert. Dies kann beispielsweise ein hydraulisches Bindemittel (z.B. Zement oder hydraulischer Kalk), ein latent hydraulisches Bindemittel (z.B. Schlacke), ein puzzolanisches Bindemittel (z.B. Flugasche) oder ein nicht hydraulisches Bindemittel (Gips oder Weisskalk) sein.

Eine mineralische Bindemittelzusammensetzung ist dementsprechend eine Zusammensetzung umfassend mindestens ein mineralisches Bindemittel.

Insbesondere enthält das mineralische Bindemittel ein hydraulisches Bindemittel, bevorzugt Zement. Besonders bevorzugt ist ein Zement mit einem Zementklinkeranteil von ≥ 35 Gew.-%. Insbesondere ist der Zement ein Portlandzement oder Portlandkompositzement vom Typ CEM I, CEM II, CEM III, CEM IV oder CEM V gemäss Norm EN 197-1, oder ein Aluminatzement, insbesondere ein Tonerdezement nach DIN EN 14647, oder Mischungen der genannten Zemente.

Die mineralische Bindemittelzusammensetzung umfasst mindestens ein hydraulisches Bindemittel, bevorzugt Zement, in wenigstens 5 Gew.-%, bevorzugt in wenigstens 20 Gew.-%, besonders bevorzugt in wenigstens 35 Gew.-%, ganz besonders bevorzugt in wenigstens 65 Gew.-%, im Speziellen ≥ 95 Gew.-%, jeweils bezogen auf die Trockenmasse der mineralischen Bindemittelzusammensetzung.

Es kann aber auch vorteilhaft sein, wenn das mineralische Bindemittel oder die mineralische Bindemittelzusammensetzung andere Bindemittel enthält oder im Wesentlichen daraus besteht. Dies sind insbesondere latent hydraulische Bindemittel und/oder puzzolanische Bindemittel. Geeignete latenthydraulische und/oder puzzolanische Bindemittel sind z.B. Schlacke, Flugasche, Silicastaub, Mikrosilika, Metakaolin, Tuff, Trass, Vulkansche, Zeolithe, und/oder gebrannten Ölschiefer.

In einer weiteren Ausführungsform kann das mineralische Bindemittel α-Claciumsulfathemihydrat, β-Calciumsulfathemihydrat, Anhydrit und/oder Kalk umfassen oder im Wesentlichen daraus bestehen.

Ebenso kann die mineralische Bindemittelzusammensetzung inerte Stoffe wie z.B. Kalkstein, Quarzmehle und/oder Pigmente enthalten

In einer vorteilhaften Ausführungsform enthält das mineralische Bindemittel 5 - 95 Gew.-%, insbesondere 5 - 65 Gew.-%, besonders bevorzugt 15 - 35 Gew.-%, jeweils bezogen auf die gesamte Trockenmasse des mineralischen Bindemittels, latenthydraulische und/oder puzzolanische Bindemittel. Vorteilhafte latenthydraulische und/oder puzzolanische Bindemittel sind Schlacke und/oder Flugasche.

In einer besonders bevorzugten Ausführungsform enthält das mineralische Bindemittel ein hydraulisches Bindemittel, insbesondere Zement oder Zementklinker, und ein latenthydraulisches und/oder puzzolanisches Bindemittel, bevorzugt Schlacke und/oder Flugasche. Der Anteil des latenthydraulischen und/oder puzzolanischen Bindemittels beträgt dabei besonders bevorzugt 5 - 65 Gew.-%, besonders bevorzugt 15 - 35 Gew.-%, während wenigstens 35 Gew.-%, im Speziellen wenigstens 65 Gew.-%, jeweils bezogen auf die Trockenmasse des mineralischen Bindemittels.

Gemäss bevorzugter Ausführungsformen ist das mineralische Bindemittel demnach ausgewählt aus der Gruppe umfassend Zement, insbesondere Portlandzement und Aluminatzement, α-Calciumsulfathemihydrat, β-Calciumsulfathyemihydrat, Anhydrit, Kalk, industrielle und synthetische Schlacken, insbesondere Hochofenschlacken, Hüttensand, Hüttensandmehl, elektrothermische Phosphorschlacke, Kupferschlacke und Edelstahlschlacke, Puzzolane, insbesondere Flugaschen, Mikrosilika, Metakaolin, natürlich Puzzolane, insbesondere Tuff, Trass und Vulkansche, natürliche und synthetische Zeolithe, gebrannten Ölschiefer sowie Mischungen davon.

Das mindestens eine olefinisch ungesättigte Carbonsäure-Monomer zum Aufbau von Copolymeren der vorliegenden Erfindung kann ein Monocarbonsäure-, ein Dicarbonsäure- oder ein Carbonsäureanhydrid-Monomer sein. Monocarbonsäure-Monomere sind besonders bevorzugt. Es ist möglich, unterschiedliche olefinisch ungesättigte Carbonsäure-Monomere zum Aufbau von Copolymeren zu verwenden. Von ungesättigten Carbonsäure-Monomeren abgeleitete Struktureinheiten des Copolymeren können unabhängig voneinander in ihrer protonierten Form vorliegen oder teilweise oder ganz neutralisiert, z.B. durch Basen wie Alkalimetall- oder Erdalkalimetallbasen, Ammoniak, organische Amine, etc.

Das mindestens eine olefinisch ungesättigte Carbonsäure-Monomer zum Aufbau von Copolymeren der vorliegenden Erfindung kann ausgewählt werden aus Strukturen der allgemeinen Strukturen (IIa) und/oder (IIb) 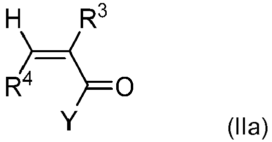
wobei R³ = H oder eine C1-C6-Alkylkette ist,
R⁴ = H, C(O)Y, oder eine C1-C6-Alkylkette ist, bevorzugt H ist, und
Y = OM, mit M ausgewählt aus H, Alkalimetallen, Erdalkalimetallen oder organischem Ammonium, oder Y = NR⁴R⁵, mit R⁴ und R⁵ unabhängig voneinander gleich H oder eine C1-C6-Alkylkette, ist; 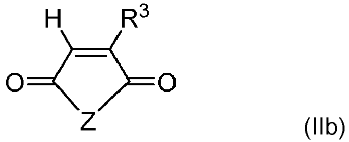 wobei Z = O oder NR⁵ ist und R³ die vorstehenden Bedeutungen hat, und R⁵ = H oder eine C1-C6-Alkylkette ist.

Besonders bevorzugte ungesättigte Carbonsäure-Monomere sind Acrylsäure und ihre Salze, Acrylamide, Methacrylsäure und ihre Salze, Methacrylamide, Maleinsäure und ihre Salze, Maleinsäureanhydrid, Maleinsäureimide, Crotonsäure und ihre Salze, Fumarsäure und ihre Salze, sowie Mischungen davon.

Das mindestens eine olefinisch ungesättigte Makromonomer der allgemeinen Struktur (I) ist ein verzweigtes Polyether Makromonomer. Es können mehrere chemisch und/oder strukturell unterschiedliche Makromonomere der allgemeinen Struktur (I) zum Aufbau von erfindungsgemässen Copolymeren verwendet werden. Strukturell unterschiedlich schliesst dabei insbesondere auch Makromonomere der allgemeinen Struktur (I) ein, die sich beispielsweise nur hinsichtlich ihrer Molmasse, z.B. durch unterschiedliche Wahl der Parameter m, o und/oder q, unterscheiden.

Besonders bevorzugt sind olefinisch ungesättigte Makromonomer der allgemeinen Struktur (I), bei denen R¹ eine Vinyl-, Allyl-, Methallyl-, Vinyloxybutyl, Isoprenyl-, Acryloyl- oder Methacryloyl-Einheit ist.

In einer bevorzugten Ausführungsform sind erfindungsgemässe olefinisch ungesättigte Makromonomere der allgemeinen Struktur (I) solche Makromonomere, bei denen p = 0 ist, falls n > 0 ist und bei denen p = 1 ist, falls n = 0 ist. In dieser Ausführungsform ist in den Makromonomeren also jeweils entweder eine (AO)ₘ-Einheit oder eine Einheit R²-X vorhanden.

Gemäss einer weiteren bevorzugten Ausführungsform sind alle m so gewählt, dass die mittlere Anzahl (BO)-Einheiten an allen o x q +1 linearen Strukturen jeweils gleich ist.

Entsprechend einer bevorzugten Ausführungsform sind erfindungsgemässe olefinisch ungesättigte Makromonomere der allgemeinen Struktur (I) solche Makromonomere, bei denen
R¹ ein olefinisch ungesättigter Rest mit 2 - 10 C-Atomen, welcher ggf. durch Sauerstoff substituiert sein kann, bevorzugt Vinyl, Allyl, Methallyl, Vinyloxybutyl, Isoprenyl, Acryloyl und/oder Methacryloyl, ist,
X = O ist,
A jeweils unabhängig voneinander C1-C10 Alkylen, bevorzugt Ethylen sind,
B jeweils unabhängig voneinander C1-C10 Alkylen, bevorzugt Ethylen sind,
m jeweils unabhängig voneinander eine ganze Zahl im Bereich 5 - 150 ist,
n eine ganze Zahl im Bereich von 5 - 55 ist,
p = 0 ist,
o eine ganze Zahl im Bereich von 8 - 50 ist,
und q eine ganze Zahl im Bereich von 1 - 10, insbesondere 1 ist.

Solche Monomere entsprechen der allgemeinen Struktur (III) 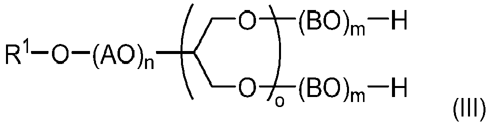
Entsprechend einer weiteren bevorzugten Ausführungsform sind erfindungsgemässe olefinisch ungesättigte Makromonomere der allgemeinen Struktur (I) solche Makromonomere, bei denen
R¹ ein olefinisch ungesättigter Rest mit 2 - 10 C-Atomen, welcher ggf. durch Sauerstoff substituiert sein kann, bevorzugt Vinyl, Allyl, Methallyl, Vinyloxybutyl, Isoprenyl, Acryloyl und/oder Methacryloyl, ist,
X = O ist,
A jeweils unabhängig voneinander Ethylen, Propylen und/oder Butylen, besonders bevorzugt Ethylen sind,
B jeweils unabhängig voneinander Ethylen, Propylen und/oder Butylen, besonders bevorzugt Ethylen sind,
m jeweils unabhängig voneinander eine ganze Zahl im Bereich von 0 - 350, besonders bevorzugt 2 - 200, ganz besonders bevorzugt 5 - 150, im Speziellen 7 - 30 sind,
n eine ganze Zahl im Bereich von 1 - 100, besonders bevorzugt 2 - 75, ganz besonders bevorzugt 5 - 55 ist,
p = 0 ist, und
o eine ganze Zahl im Bereich von 1 - 50, besonders bevorzugt 3 - 40, ganz besonders bevorzugt 6 - 30, im Speziellen 8 - 20 ist, und
q mindestens 2 ist.

Solche Makromonomere entsprechen der allgemeinen Struktur (IV) 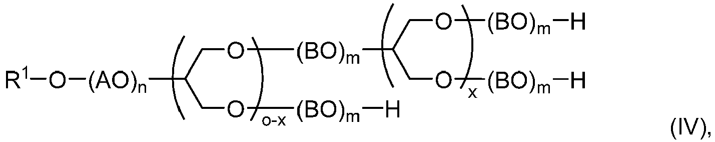
wobei x eine ganze Zahl von 1-9 ist, mit der Massgabe, dass x < o.
Entsprechend einer weiteren bevorzugten Ausführungsform sind erfindungsgemässe olefinisch ungesättigte Makromonomere der allgemeinen Struktur (I) solche Makromonomere, bei denen
R¹ ein olefinisch ungesättigter Rest mit 2 - 10 C-Atomen, welcher ggf. durch Sauerstoff substituiert sein kann, bevorzugt Vinyl, Allyl, Methallyl, Vinyloxybutyl, Isoprenyl, Acryloyl und/oder Methacryloyl, ist,
X = O ist,
B jeweils unabhängig voneinander Ethylen, Propylen und/oder Butylen, besonders bevorzugt Ethylen sind,
R² gleich C1-C16 Alkyl, besonders bevorzugt C2-C4 Alkyl, insbesondere Butyl ist, m jeweils unabhängig voneinander eine ganze Zahl im Bereich von 0 - 350, besonders bevorzugt 2 - 200, ganz besonders bevorzugt 5 - 150, im Speziellen 7 - 30 sind,
n = 0 ist,
p = 1 ist,
o eine ganze Zahl im Bereich von 1 - 50, besonders bevorzugt 3 - 40, ganz besonders bevorzugt 6 - 30, im Speziellen 8 - 20 ist, und
q mindestens 2 ist.

Solche Makromonomere entsprechen der allgemeinen Struktur (V) 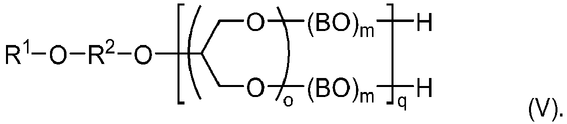
Entsprechend einer weiteren bevorzugten Ausführungsform sind erfindungsgemässe olefinisch ungesättigte Makromonomere der allgemeinen Struktur (I) solche Makromonomere, bei denen
R¹ ein olefinisch ungesättigter Rest mit 2 - 10 C-Atomen, welcher ggf. durch Sauerstoff substituiert sein kann, bevorzugt Vinyl, Allyl, Methallyl, Vinyloxybutyl, Isoprenyl, Acryloyl und/oder Methacryloyl, ist,
X = O ist,
B jeweils unabhängig voneinander Ethylen, Propylen und/oder Butylen, besonders bevorzugt Ethylen sind,
m jeweils unabhängig voneinander eine ganze Zahl im Bereich von 0 - 350, besonders bevorzugt 2 - 200, ganz besonders bevorzugt 5 - 150, im Speziellen 7 - 30 sind,
n = 0 ist,
p = 0 ist,
q eine ganze Zahl im Bereich von 1 - 10 ist, und
o jeweils unabhängig voneinander eine ganze Zahl im Bereich von 1 - 50, besonders bevorzugt 3 - 40, ganz besonders bevorzugt 6 - 30, im Speziellen 8 - 20 sind.

Solche Makromonomere entsprechen der allgemeinen Struktur (VI)

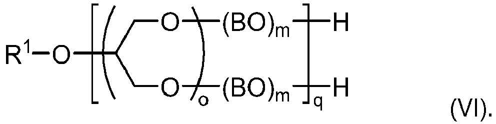

Das molare Verhältnis des mindestens einen olefinisch ungesättigten Carbonsäure-Monomers zu dem mindestens einen olefinisch ungesättigten Makromonomer der allgemeinen Struktur (I) liegt im Bereich von 0.3 - 30, bevorzugt 0.6 - 10, besonders bevorzugt 1 - 4.5, insbesondere 1 - 3.

Zusätzlich zu dem mindestens einen olefinisch ungesättigten Carbonsäure-Monomer und dem mindestens einen olefinisch ungesättigten Makromonomer der allgemeinen Struktur (I) können erfindungsgemässe Copolymere ein oder mehrere weitere Monomere M enthalten. Diese weiteren Monomere M können ausgewählt sein aus Styrol, Ethylen, Propylen, Butylen, Butadien, Isopren, Vinylacetat, Vinylchlorid, Acrylonitril, N-Vinylpyrrolidon, Hydroxyalkyl(meth)acrylaten und/oder Makromonomeren der allgemeinen Strukturen (VII) 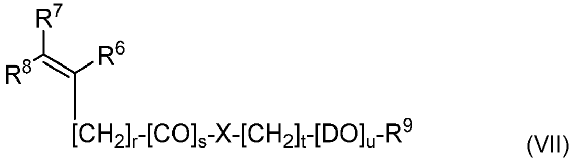 wobei
R⁶, jeweils unabhängig voneinander H, -CH₂-COOM oder eine Alkylgruppe mit 1 bis 5 C-Atomen, bevorzugt H oder -CH₃, ist,
R⁷, jeweils unabhängig voneinander H oder eine Alkylgruppe mit 1 bis 5 C-Atomen, bevorzugt H, ist,
R⁸, jeweils unabhängig voneinander H, -COOM oder eine Alkylgruppe mit 1 bis 5 C-Atomen, bevorzugt H, ist,
r = 0, 1 oder 2 ist,
s = 0 oder 1 ist,
t = 0, oder eine ganze Zahl von 1 bis 4 ist,
u = 2 - 250, insbesondere 10 - 200 ist,
X jeweils unabhängig voneinander -O- oder -NH- ist,
R⁹, jeweils unabhängig voneinander H, eine C1- bis C20-Alkylgruppe, - Cyclohexylgruppe oder -Alkylarylgruppe ist, und
D eine C2- bis C4-Alkylen-Gruppe, bevorzugt Ethylen ist.

In einer ganz besonders bevorzugten Ausführungsform sind die zusätzlichen Monomere **M** ausgewählt aus linearen Polyethylenglykol-Ethern, insbesondere Polyethylenglykolether von Vinylalkohol, Allylalkohol, Methallylalkohol, Vinyloxybutylalkohol und/oder Isoprenol, und/oder linearen Polyethylenglykol-Estern, insbesondere Polyethylenglykolester der Acrylsäure und/oder Methacrylsäure.

Es ist bevorzugt, dass der molare Anteil des einen oder der mehreren weiteren Monomeren **M** gleich oder kleiner 66 mol%, bevorzugt gleich oder kleiner 50 mol-%, mehr bevorzugt gleich oder kleiner 25 mol-%, besonders bevorzugt gleich oder kleiner 10 mol-%, insbesondere gleich oder kleiner 5 mol-%, jeweils bezogen auf alle das Copolymere aufbauenden Monomere, ist.

Olefinisch ungesättigte Makromonomere der allgemeinen Struktur (I) können hergestellt werden in einem mehrstufigen Verfahren, umfassend die Schritte
1) optional Umsetzung eines Starters **S,** ausgewählt aus der Gruppe bestehend aus Alkoholen, Aminen, Carbonsäuren oder Carbonsäureamiden der allgemeinen Formel R¹-XH, mit einem Alkoxylierungsmittel und/oder einem halogenierten Alkohol oder halogenierten Amin Hal-R²-XH, wobei R¹ ein olefinisch ungesättigter Rest mit 2 - 10 C-Atomen, welcher ggf. durch Sauerstoff substituiert sein kann, bevorzugt Vinyl, Allyl, Methallyl, Vinyloxybutyl, Isoprenyl, Acryloyl und/oder Methacryloyl, ist, X = O oder NH, Hal = Cl, Br oder I, und R² = C1 - C16 Alkyl ist,
2) Umsetzung eines Startes **S** oder des Reaktionsproduktes aus Schritt 1) mit Glycidol oder Epichlorhydrin oder einer Mischung aus Glycidol und einem Alkoxylierungsmittel oder einer Mischung aus Epichlorhydrin und einem Alkoxylierungsmittel,
3) optional Umsetzung des Reaktionsproduktes aus Schritt 2) mit einem Alkoxylierungsmittel.

Vorzugsweise werden die einzelnen Schritte des Verfahrens aufeinanderfolgend, ohne Isolierung oder Aufreinigung der Zwischenprodukte durchgeführt.

Die Reaktionsbedingungen der Schritte 1) bis 3) können variieren. So können beispielsweise die Reaktionstemperatur, der Druck, und/oder die Art und Menge an eingesetztem Katalysator der Schritte 1) bis 3) unterschiedlich sein. Im Allgemeinen ist es jedoch bevorzugt, wenn die Reaktionstemperatur, der Druck, sowie die Art und Menge an eingesetztem Katalysator in den Schritten 1) bis 3) dieselben sind.

Die Reaktionstemperatur kann im Bereich zwischen 80 °C - 180 °C, insbesondere 100 °C - 140 °C variieren. Der Druck liegt vorzugsweise im Bereich von 1 - 5 bar, insbesondere im Bereich von 1 - 3 bar.

Die einzelnen Schritte des Verfahrens werden vorzugsweise unter Katalyse durchgeführt. Geeignete Katalysatoren für die Alkoxylierungen der Schritte 1) bis 3) sind dem Fachmann an sich bekannt. In bevorzugten Ausführungsformen werden die Reaktionsschritte 1) bis 3) katalysiert. Es ist insbesondere bevorzugt, denselben Katalysator für die Schritte 1) bis 3) zu nutzen, ohne diesen zwischenzeitlich zu entfernen oder zu deaktivieren. Als besonders geeignete Katalysatoren haben sich Alkalimetallhydroxide und/oder Alkalimetallalkoholate herausgestellt. In einer bevorzugten Ausführungsform wird als Katalysator ein Alkalimetallalkoholat desjenigen Alkohols eingesetzt wird, der auch als Starter **S** verwendet wird. Es kann auch bevorzugt sein, Natriumalkoholate, im Speziellen Natriummethanolat oder Natriumethanolat als Katalysator einzusetzen.

Ein geeignetes Verfahren zur Herstellung von erfindungsgemässen Makromonomeren wird beispielsweise in der EP 0 116 978 angegeben.

Der Starter **S** ist vorliegend eine Verbindung ausgewählt aus der Gruppe bestehend aus Alkoholen, Aminen, Carbonsäuren oder Carbonsäureamiden der allgemeinen Formel R¹-XH, wobei R¹ ein olefinisch ungesättigter Rest mit 2 - 10 C-Atomen, welcher ggf. durch Sauerstoff substituiert sein kann, bevorzugt Vinyl, Allyl, Methallyl, Vinyloxybutyl, Isoprenyl, Acryloyl und/oder Methacryloyl, ist und X = O oder NH ist. Es ist besonders bevorzugt, dass der Starter **S** ausser der Gruppe XH keine weiteren nucleophilen Gruppen enthält. Wenn der Starter **S** ein Alkohol ist, so handelt es sich um ein Monool, also um einen Alkohol mit nur einer OH-Gruppe. Wenn der Starter **S** ein Amin ist, so handelt es sich um ein primäres Amin, also um ein Amin mit einer NH₂-Gruppe. Es handelt sich bei dem Starter **S** nicht um ein sekundäres oder tertiäres Amin.

In besonders bevorzugten Ausführungsformen ist der Starter **S** ausgewählt aus der Gruppe bestehend aus Isoprenol, Vinylalkohol, Allylalkohol, Methallylalkohol, Vinyloxybutylalkohol, Acrylsäure, Methacrylsäure, Acrylamid oder Methacrylamid.

Alkoxylierungsmittel im Sinne der vorlegenden Erfindung sind Verbindungen, die durch Polymerisation zu Polyethern umgesetzt werden können. Alkoxylierungsmittel bewirken also eine Alkoxylierung, bzw. den Aufbau von Alkylenoxid- bzw. Polyalkylenoxid-Einheiten. Insbesondere enthalten Alkoxylierungsmittel im Sinne der vorliegenden Erfindung Oxiran-, Oxetan- oder Oxolan-Strukturen. Besonders bevorzugte Alkoxylierungsmittel sind Alkylenoxide ausgewählt aus Ethylenoxid, Propylenoxid und/oder 1,2-Butylenoxid, und/oder Tetrahydrofuran. Im Speziellen ist das Alkoxylierungsmittel Ethylenoxid und/oder Propylenoxid. Es kann bevorzugt sein, nur ein Alkoxylierungsmittel in einem der Schritte 1) bis 3) zu verwenden. In einer ganz bevorzugten Ausführungsform wird nur ein Alkoxylierungsmittel, insbesondere Ethylenoxid, in den Schritten 1) bis 3) verwendet. Es ist aber auch möglich zwei oder mehr Alkoxylierungsmittel in den Schritten 1) bis 3) zu verwenden, entweder als Gemisch oder jeweils einzeln in jeweils einem der Schritte 1) bis 3).

In einer bevorzugten Ausführungsform werden erfindungsgemässe Makromonomere ohne die Verwendung von Epichlorhydrin hergestellt. Das Verfahren zur Herstellung ist also Epichlorhydrin-frei. Erfindungsgemässe Makromonomere können demzufolge bevorzugt hergestellt werden in einem Verfahren umfassend die Schritte:
1) optional Umsetzung eines Starters **S,** ausgewählt aus der Gruppe bestehend aus Alkoholen, Aminen, Carbonsäuren oder Amiden der allgemeinen Formel R¹-XH, mit einem Alkoxylierungsmittel und/oder einem halogenierten Alkohol oder halogenierten Amin Hal-R²-XH, wobei R¹ ein olefinisch ungesättigter Rest mit 2 - 10 C-Atomen, welcher ggf. durch Sauerstoff substituiert sein kann, bevorzugt Vinyl, Allyl, Methallyl, Vinyloxybutyl, Isoprenyl, Acryloyl und/oder Methacryloyl, ist, X = O oder NH, Hal = Cl, Br oder I, und R² = C1 - C16 Alkyl ist,
2) Umsetzung eines Startes **S** oder des Reaktionsproduktes aus Schritt 1) mit Glycidol oder einer Mischung aus Glycidol und einem Alkoxylierungsmittel,
3) optional Umsetzung des Reaktionsproduktes aus Schritt 2) mit einem Alkoxylierungsmittel.

Dabei ist es insbesondere bevorzugt, wenn das Verfahren die Schritte 1) und 3) umfasst, Schritte 1) und 3) also nicht optional sind, sondern zwingend vorhanden sind.

In einer besonders bevorzugten Ausführungsform werden erfindungsgemässe Makromonomere ohne die Verwendung von Epichlorhydrin und unter Verwendung eines Alkohols als Starter **S** hergestellt. Das Verfahren zur Herstellung ist also Epichlorhydrin-frei. Erfindungsgemässe Makromonomere können demzufolge besonders bevorzugt hergestellt werden in einem Verfahren umfassend die Schritte:
1) optional Umsetzung eines Alkohols R¹-OH mit einem Alkoxylierungsmittel und/oder einem halogenierten Alkohol oder halogenierten Amin Hal-R²-XH, wobei R¹ ein olefinisch ungesättigter Rest mit 2 - 10 C-Atomen, welcher ggf. durch Sauerstoff substituiert sein kann, bevorzugt Vinyl, Allyl, Methallyl, Vinyloxybutyl oder Isoprenyl ist, X = O oder NH, Hal = Cl, Br oder I, und R² = C1 - C16 Alkyl ist,
2) Umsetzung eines Alkohols R¹-OH oder des Reaktionsproduktes aus Schritt 1) mit Glycidol oder einer Mischung aus Glycidol und einem Alkoxylierungsmittel,
3) optional Umsetzung des Reaktionsproduktes aus Schritt 2) mit einem Alkoxylierungsmittel.

Dabei ist es insbesondere bevorzugt, wenn das Verfahren die Schritte 1) und 3) umfasst, Schritte 1) und 3) also nicht optional sind, sondern zwingend vorhanden sind.

In einer weiteren besonders bevorzugten Ausführungsform werden erfindungsgemässe Makromonomere ohne die Verwendung von Epichlorhydrin und unter Verwendung eines Amins als Starter **S** hergestellt. Das Verfahren zur Herstellung ist also Epichlorhydrin-frei. Erfindungsgemässe Copolymere können demzufolge weiterhin besonders bevorzugt hergestellt werden in einem Verfahren umfassend die Schritte:
1) optional Umsetzung eines Amins R¹-NH₂ mit einem Alkoxylierungsmittel und/oder einem halogenierten Alkohol oder halogenierten Amin Hal-R²-XH, wobei R¹ ein olefinisch ungesättigter Rest mit 2 - 10 C-Atomen, welcher ggf. durch Sauerstoff substituiert sein kann, bevorzugt Vinyl, Allyl, Methallyl, Vinyloxybutyl, oder Isoprenyl, ist, X = O oder NH, Hal = Cl, Br oder I, und R² = C1 - C16 Alkyl ist,
2) Umsetzung eines Amins R¹-NH₂ oder des Reaktionsproduktes aus Schritt 1) mit Glycidol oder einer Mischung aus Glycidol und einem Alkoxylierungsmittel,
3) optional Umsetzung des Reaktionsproduktes aus Schritt 2) mit einem Alkoxylierungsmittel.

Dabei ist es insbesondere bevorzugt, wenn das Verfahren Schritt 3) umfasst, Schritt 3) also nicht optional ist, sondern zwingend vorhanden ist.

In einer weiteren besonders bevorzugten Ausführungsform werden erfindungsgemässe Makromonomere ohne die Verwendung von Epichlorhydrin und unter Verwendung einer Carbonsäure als Starter **S** hergestellt. Das Verfahren zur Herstellung ist also Epichlorhydrin-frei. Erfindungsgemässe Copolymere können demzufolge weiterhin besonders bevorzugt hergestellt werden in einem Verfahren umfassend die Schritte:
1) optional Umsetzung einer Carbonsäure R¹-OH mit einem Alkoxylierungsmittel und/oder einem halogenierten Alkohol oder halogenierten Amin Hal-R²-XH, wobei R¹ ein olefinisch ungesättigter Rest mit 2 - 10 C-Atomen, welcher ggf. durch Sauerstoff substituiert sein kann, bevorzugt Acryloyl und/oder Methacryloyl, ist, X = O oder NH, Hal = Cl, Br oder I, und R² = C1 - C16 Alkyl ist,
2) Umsetzung einer Carbonsäure R¹-OH oder des Reaktionsproduktes aus Schritt 1) mit Glycidol oder einer Mischung aus Glycidol und einem Alkoxylierungsmittel,
3) optional Umsetzung des Reaktionsproduktes aus Schritt 2) mit einem Alkoxylierungsmittel.

Dabei ist es insbesondere bevorzugt, wenn das Verfahren die Schritte 1) und 3) umfasst, Schritte 1) und 3) also nicht optional sind, sondern zwingend vorhanden sind.

In einer ganz besonders bevorzugten Ausführungsform werden erfindungsgemässe Makromonomere ohne die Verwendung von Epichlorhydrin und unter Verwendung eines Alkohols als Starter **S** hergestellt, wobei der Starter-Akohol zunächst mit einem Alkoxylierungsmittel umgesetzt wird. Das Verfahren zur Herstellung ist also Epichlorhydrin-frei. Erfindungsgemässe Makromonomere können demzufolge ganz besonders bevorzugt hergestellt werden in einem Verfahren umfassend die Schritte:
1) Umsetzung eines Alkohols R¹-OH mit einem Alkoxylierungsmittel, wobei R¹ ein olefinisch ungesättigter Rest mit 2 - 10 C-Atomen, welcher ggf. durch Sauerstoff substituiert sein kann, bevorzugt Vinyl, Allyl, Methallyl, Vinyloxybutyl oder Isoprenyl, ist,
2) Umsetzung des Reaktionsproduktes aus Schritt 1) mit Glycidol oder einer Mischung aus Glycidol und einem Alkoxylierungsmittel,
3) optional Umsetzung des Reaktionsproduktes aus Schritt 2) mit einem Alkoxylierungsmittel.

Dabei ist es insbesondere bevorzugt, wenn das Verfahren Schritt 3) umfasst, Schritt 3) also nicht optional ist, sondern zwingend vorhanden ist.

Erfindungsgemässe Copolymere können statistische oder nicht-statistische Copolymere sein. Nicht-statistische Copolymere sind insbesondere alternierende Copolymere oder Block- oder Gradienten-Copolymere.

Erfindungsgemässe Copolymere, welche statistische Copolymere sind, können durch freie radikalische Polymerisation von Mischungen umfassend mindestens ein olefinisch ungesättigtes Carbonsäure-Monomer sowie mindestens ein olefinisch ungesättigtes Monomer der allgemeine Struktur (I) wie oben beschrieben hergestellt werden. Geeignete Bedingungen zur Durchführung der freien radikalischen Polymerisation sind dem Fachmann an sich bekannt und beispielsweise beschreiben in EP 1 103 570 (Nippon Shokubai).

Erfindungsgemässe Copolymere, welche nicht-statistische Copolymere sind, insbesondere Block- oder Gradienten-Copolymere, können bevorzugt durch lebende freie radikalische Polymerisation hergestellt werden. Die Techniken der lebenden freien radikalischen Polymerisation sind unter anderem die Nitroxid-vermittelte-Polymerisation (NMP), die Atom-Transfer-Radikalpolymerisation (ATRP) oder die Reversible Additions-Fragmentierungs Kettenübertragungs-Polymerisation (RAFT). Die lebende freie radikalische Polymerisation erfolgt im Wesentlichen unter Abwesenheit von irreversiblen Übertragungs- oder Abbruchreaktionen. Die Zahl der aktiven Kettenenden ist gering und bleibt während der Polymerisation im Wesentlichen konstant. Dies wird beispielsweise bei der RAFT-Polymerisation durch die Verwendung eines RAFT-Agens und einer nur geringen Menge an Initiator erreicht. Dadurch wird ein im Wesentlichen zeitgleiches und während des gesamten Polymerisationsprozesses anhaltendes Wachstum der Ketten ermöglicht. Dadurch ergibt sich die Möglichkeit, mit diesem Prozess Block- oder Gradienten- Copolymere herzustellen und es ergibt sich entsprechend eine enge Molekulargewichtsverteilung bzw. Polydispersität des Polymers. Dies ist bei der herkömmlichen "freien radikalischen Polymerisation" bzw. der nicht lebend durchgeführten freien radikalischen Polymerisation nicht möglich. Besonders vorteilhaft können nicht-statistische Copolymere der vorliegenden Erfindung mittels RAFT-Polymerisation hergestellt werden. Vorteilhafte RAFT-Agentien sind Dithioester, Dithiocarbamat, Trithiocarbonat oder Xanthat.

Vorteilhafte Initiatoren sind Azobisisobutyronitril (AIBN), *α,α'*-Azodiisobutyramidine dihydrochloride (AAPH) oder Azo-bis-isobutyramidin (AIBA).

Die Herstellung erfindungsgemässer Copolymere durch freie radikalische Polymerisation oder durch lebende freie radikalische Polymerisation erfolgt in einer besonders bevorzugten Ausführungsform direkt im Anschluss an die Herstellung des mindestens einen olefinisch ungesättigten Makromonomeren der allgemeinen Struktur (I). Ein weiterer Aspekt der vorliegenden Erfindung betrifft daher einen mehrstufigen Prozess zur Herstellung eines Copolymer zur Verwendung als Dispergiermittel von mineralischen Bindemitteln. Ein besonders bevorzugtes Verfahren zur Herstellung von erfindungsgemässen Copolymeren umfasst daher die Schritte:
1) optional Umsetzung eines Starters **S,** ausgewählt aus der Gruppe bestehend aus Alkoholen, Aminen, Carbonsäuren oder Amiden der allgemeinen Formel R¹-XH, mit einem Alkoxylierungsmittel und/oder einem halogenierten Alkohol oder halogenierten Amin Hal-R²-XH, wobei R¹ ein olefinisch ungesättigter Rest mit 2 - 10 C-Atomen, welcher ggf. durch Sauerstoff substituiert sein kann, bevorzugt Vinyl, Allyl, Methallyl, Vinyloxybutyl, Isoprenyl, Acryloyl und/oder Methacryloyl, ist, X = O oder NH, Hal = Cl, Br oder I, und R² = C1 - C16 Alkyl ist,
2) Umsetzung eines Startes **S** oder des Reaktionsproduktes aus Schritt 1) mit Glycidol oder Epichlorhydrin oder einer Mischung aus Glycidol und einem Alkoxylierungsmittel oder einer Mischung aus Epichlorhydrin und einem Alkoxylierungsmittel,
3) optional Umsetzung des Reaktionsproduktes aus Schritt 2) mit einem Alkoxylierungsmittel, und
4) radikalische Polymerisation eines Gemisches aus mindestens einem olefinisch ungesättigen Carbonsäure-Monomer mit dem Reaktionsprodukt aus Schritt 3) oder, falls dieser nicht Teil des Verfahrens ist, mit dem Reaktionsprodukt aus Schritt 2).

Dabei ist es insbesondere bevorzugt, wenn das Verfahren die Schritte 1) und 3) umfasst, Schritte 1) und 3) also nicht optional sind, sondern zwingend vorhanden sind.

Besonders bevorzugt umfasst das Verfahren keine Schritte zur Aufarbeitung und/oder Reinigung von Zwischenprodukten. Allerdings müssen Katalysatoren und/oder Neutralisationsreagentien, welche in den Schritten 1) bis 3) eingesetzt werden und welche die radikalische Polymerisation behindern können entfernt oder abreagiert werden. Insbesondere können dies solche Katalysatoren und/oder Neutralisationsreagentien sein, welche mit Aktivatoren, Initiatoren, und/oder Regulatoren, wie Kettenübertragungsragentien oder RAFT-Agentien, der radikalischen Polymerisation wechselwirken.

Entsprechend einer besonders bevorzugten Ausführungsform wird die radikalische Polymerisation als Lösungspolymerisation, insbesondere in einem Lösemittel enthaltend Wasser, durchgeführt. Es ist ganz besonders bevorzugt, die Polymerisation in reinem Wasser durchzuführen.

Es ist bevorzugt, die radikalische Polymerisation zur Herstellung von erfindungsgemässen Copolymeren bis zu einem Umsatz von mindestens 75%, bevorzugt mindestens 80 %, mehr bevorzugt mindestens 90%, ganz besonders bevorzugt mindestens 95%, im Speziellen mindestens 98% oder mehr, jeweils bezogen auf die gesamte Stoffmenge der vorhandenen Monomeren, zu fahren.

Erfindungsgemässe Copolymere können in flüssiger Form, beispielsweise in Form einer Lösung oder Dispersion, insbesondere in Form einer wässrigen Lösung vorliegen. Es ist bevorzugt, wenn erfindungsgemässe Copolymere einen Anteil an einer Lösung oder Dispersion, insbesondere einer wässrigen Lösung, von wenigstens 30 Gew.-%, bevorzugt wenigstens 40 Gew.-%, besonders bevorzugt wenigstens 50 Gew.-%, jeweils bezogen auf das Gesamtgewicht der Lösung oder Dispersion, haben.

Es ist ebenfalls möglich, erfindungsgemässe Copolymere in eine feste Form, bevorzugt eine Pulverform, zu überführen. Geeignete Methoden sind beispielsweise das Aufziehen auf einen festen Träger und/oder die Trocknung einer Lösung oder Dispersion enthaltend erfindungsgemässe Copolymere. Ein geeignetes Verfahren zur Trocknung ist beispielsweise die Sprühtrocknung. Ein mehrstufiger Prozess zur Herstellung eines erfindungsgemässen Copolymeren kann daher einen Schritt zur Trocknung, insbesondere Sprühtrocknung des Copolymeren enthalten. Pulverförmige erfindungsgemässe Copolymere können einem mineralischen Bindemittel oder einer mineralischen Bindemittelzusammensetzung beigegeben werden, beispielsweise zur Herstellung einer Trockenmörtelmischung.

Die Verwendung erfindungsgemässer Copolymere in mineralischen Bindemitteln oder mineralischen Bindemittelzusammensetzungen erfolgt zum Zwecke der Verbesserung deren Fliessverhalten und/oder deren Viskosität. Dies bedeutet, dass eine mineralische Bindemittelzusammensetzung enthaltend mindestens ein erfindungsgemässes Copolymer besser fliesst, also ein höheres Ausbreitmass gemessen nach DIN EN 12350-5 zeigt, als dieselbe mineralische Bindemittelzusammensetzung ohne erfindungsgemässes Copolymer. Dies bedeutet gleichzeitig, dass durch die Verwendung eines erfindungsgemässen Copolymeren in einer mineralischen Bindemittelzusammensetzung die Menge an Wasser, die zur Einstellung eines bestimmten Ausbreitmasses benötigt wird, kleiner ist, als bei einer entsprechenden Zusammensetzung ohne erfindungsgemässes Copolymer. Weiter führt die Verwendung eines erfindungsgemässen Copolymers in einer mineralischen Bindemittelzusammensetzung zu einer Verringerung der Viskosität, gemessen als eine Verringerung der Trichterauslaufzeit nach Norm DIN EN 12350-9, im Vergleich zu einer entsprechenden Zusammensetzung ohne erfindungsgemässes Copolymer. Beide Eigenschaften sind gleichermassen wichtig, um optimale Verarbeitungseigenschaften von mineralischen Bindemittelzusammensetzungen zu erreichen.

Desweiteren führt die Verwendung eines erfindungsgemässen Copolymers in einer mineralischen Bindemittelzusammensetzung zu einem besonders niedrigen Lufteintrag. Der Lufteintrag wird gemessen nach Norm DIN EN 12350-7. Dies ist insbesondere für die Erreichung einer hohen Endfestigkeit wichtig. Darüber hinaus führt diese Eigenschaft auch dazu, dass erfindungsgemässe Copolymere mit gängigen Luftporenbildnern kombiniert werden können, ohne deren Wirksamkeit zu beeinflussen. Der Eintrag einer gewünschten Menge an Luft und damit einer bestimmten Luftporenverteilung wird dadurch auf einfache Weise gewährleistet, ohne dass eine Abstimmung der Art und Menge des Luftporenbildners auf das Dispergiermittel erfolgen muss.

Ein weiterer Aspekt der vorliegenden Erfindung ist daher ein mineralisches Bindemittel oder eine mineralische Bindemittelzusammensetzung umfassend mindestens ein mineralisches Bindemittel, bevorzugt Zement, sowie mindestens ein erfindungsgemässes Copolymer.

Die mineralischen Bindemittel sowie erfindungsgemässe Copolymere sind wie oben beschreiben. Es ist möglich und in manchen Fällen auch bevorzugt, dass Mischungen aus zwei oder mehr erfindungsgemässen Copolymeren, welche sich chemisch und/oder strukturell unterscheiden, verwendet werden.

Bei der mineralischen Bindemittelzusammensetzung handelt es sich bevorzugt um eine Mörtel- oder Betonzusammensetzung.

Die mineralische Bindemittelzusammensetzung kann mit Wasser angemacht werden und/oder Wasser enthalten. Das Verhältnis von Wasser zu mineralischem Bindemittel liegt im Bereich von 0.18 - 0.7, bevorzugt 0.2 - 0.6, besonders bevorzugt 0.25 - 0.5, ganz besonders bevorzugt 0.3 - 0.45. In ganz besonders bevorzugten Ausführungsformen ist das mineralische Bindemittel ein Zement, das Verhältnis von Wasser zu mineralischem Bindemittel entspricht dann dem w/z-Wert.

Das erfindungsgemässe Copolymer ist in einem mineralischen Bindemittel oder einer mineralischen Bindemittelzusammensetzung mit Vorteil mit einem Anteil von 0.01 - 10 Gew.-%, bevorzugt 0.05 - 7 Gew.-%, besonders bevorzugt 0.1 - 5 Gew.-%, ganz besonders bevorzugt 0.2 - 3 Gew.-%, insbesondere 0.2 - 1 Gew.-%, jeweils bezogen auf den Gehalt an mineralischem Bindemittel, vorhanden.

Es ist möglich, ein erfindungsgemässes Copolymer als solches, beispielsweise in Pulverform, zu einer mineralischen Bindemittelzusammensetzung zu geben. Es ist aber auch möglich, ein erfindungsgemässes Copolymer als wässrige Lösung oder Dispersion in Wasser zu einer mineralischen Bindemittelzusammensetzung zu geben. Weiter ist es möglich, ein erfindungsgemässes Copolymer in einem Zusatzmittel, insbesondere einem wässrigen Zusatzmittel, zu lösen oder zu dispergieren.

Ein weiterer Aspekt der vorliegenden Erfindung ist daher ein Zusatzmittel umfassend mindestens ein erfindungsgemässes Copolymer. Zusätzlich kann das Zusatzmittel weitere gängige Zusatzmittel für mineralische Bindemittelzusammensetzungen enthalten. Solche gängigen Zusatzmittel sind vorteilhaft ausgewählt aus der Liste bestehend aus Verflüssigern, Luftporenbildnern, Entschäumern, Beschleunigern, Verzögerern, Schwundreduzierern, Aktivatoren, Dichtungsmittel, Stabilisierer, Verdicker, Chromatreduzierer, Korrosionsinhibitoren, Hydrophobisierungsmitteln, Pigmenten, Fasern und Bioziden.

In einer besonderen Ausführungsform wird mindestens ein erfindungsgemässes Copolymere mit einem oder mehreren herkömmlichen Verflüssigern auf Basis Polycarboxylatether (PCE) in einem Zusatzmittel verwendet. Geeignete PCE werden beispielsweise beschrieben in EP0753488, EP1138697, EP1179517 und EP1966258. Es ist möglich, das mindestens eine erfindungsgemässe Copolymere mit einem oder mehreren Verflüssigern auf Basis PCE zu einer Komponenten zu vermischen und diese einer mineralischen Bindemittelzusammensetzung zuzugeben. Es ist aber auch möglich, das mindestens eine erfindungsgemässe Copolymere und einen oder mehrere Verflüssiger auf Basis PCE einer mineralischen Bindemittelzusammensetzung jeweils separat zuzugeben.

Ein letzter Aspekt der vorliegenden Erfindung ist ein Formkörper, erhältlich durch Aushärten eines mineralischen Bindemittels oder einer mineralischen Bindemittelzusammensetzung umfassend mindestens ein erfindungsgemässes Copolymer. Der Formkörper kann beispielsweise ein Betonteil, z.B. ein Betonfertigteil oder ein Betonstein, sein, eine ausgehärtete Mörtelmischung, z.B. Fugenmörtel oder ein Estrich, sein und/oder Teil eines Bauwerkes, z.B. einer Brücke oder eines Tunnels, sein.

Im Folgenden wird die Erfindung durch Beispiele näher erläutert. Die Beispiele dienen jedoch nur der Veranschaulichung und sind nicht als Einschränkung des Umfangs der Erfindung anzusehen.

### BEISPIELE

### Synthesebeispiel 1: Herstellung des Makromonomeren M-1

Schritt 1: In einem mit N₂-Gas inertisierten Reaktor werden 4 g (0.074 mol) Natriummethylat in 464 g (8 mol) Allylalkohol gelöst und auf 100°C geheizt. Danach werden während 5 Stunden 1760 g (40 mol) Ethylenoxid zudosiert. Dabei wird die Temperatur bei 100 bis 140°C und der Druck bei 1 bis 3 bar gehalten. Nach Beendigung der Dosierung wird das Reaktionsgemisch 2 Stunden bei 140°C gerührt. Anschliessend wird das Gemisch auf 30°C gekühlt.

Schritt 2: In einem mit N₂-Gas inertisierten Reaktor werden 117 g (0.42 mol) des Gemisches aus Schritt 1) mit 0.54 g (0.01 mol) Natriummethylat versetzt und auf 130°C erhitzt. Danach werden während 30 Minuten 93 g (1.26 mol) Glycidol zudosiert. Dabei werden die Temperatur bei 130 bis 140°C und der Druck bei 1 bis 3 bar gehalten. Nach Beendigung der Dosierung wird das Reaktionsgemisch 2 Stunden bei 140°C gerührt. Man lässt auf 50 °C abkühlen.

Schritt 3: Nach dem Abkühlen auf 50°C werden zu dem Gemisch aus Schritt 2) 2.2 g (0.04 mol) Natriummethylat zugegeben. Der Reaktor wird erneut mit N₂-Gas inertisiert und auf 130°C geheizt. Danach werden während 4 Stunden 628 g (14.27 mol) Ethylenoxid zudosiert. Dabei werden die Temperatur bei 130 bis 140°C und der Druck bei 0 bis 3 bar gehalten. Nach Beendigung der Dosierung wird das Reaktionsgemisch 3 Stunden bei 140°C gerührt. Anschliessend wird das Gemisch auf 50°C gekühlt und mit 3.2 g (0.054 mol) Essigsäure neutralisiert. Die erhaltene Mischung ist das Makromonomer M-1.

### Synthesebeispiel 2: Herstellung des Copolymeren C-1

In einem mit N₂-Gas inertisierten Reaktor werden 70 g Wasser, 57 g (0.05 mol) des Makromonomeren M-1, 27 g (0.05 mol) eines Allylalkohol-gestarteten Polyethylenglykols (11 EO-Einheiten), 26 g (0.36 mol) Acrylsäure, 50 g einer 16% wässrigen NaOH-Lösung, 0.8 g einer 10% wässrigen Lösung von Fe(II)SO₄ · 7 H₂O und 1.1 g Natriumhypophosphit vorgelegt. Unter Rühren werden tropfenweise 5.5 g einer 30% wässrigen Wasserstoffperoxidlösung und 2.3 g einer 5% wässrigen Rongalitlösung innerhalb von 70 min bei einer Temperatur von 20 - 35 °C gleichzeitig zugegeben. 120 min nach Beginn der Zugabe erhält man eine klare Lösung des Copolymeren C-1.

Die folgende Tabelle gibt einen Überblick über die verwendeten Copolymere.

**Tabelle 1: Verwendete Copolymere**

| | |
|---|---|
| R-1 | Wässrige Lösung eines PCE (55% Trockengehalt) aus Acrylsäure (3.6 mol) und ethoxyliertem Methyallylalkohol (Mw = 2'400 g/mol; 1 mol) |
| C-1 | Copolymer aus Synthesebeispiel 2 |

### Anwendunasbeispiel 1: Mörtelprüfung

Es wurde eine Trockenmischung hergestellt bestehend aus 150 g Zement (CEM I 42.5 N von Vigier Holding AG), 5.8 g Mikrosilika (SikaFume® -HR/-TU, erhältlich von Sika Schweiz AG), 69.2 g Hochofenschlacke (Regen GGBS von Hanson UK) und 41.5 g Kalkstein (Nekafill 15 von Kalkfabrik Netstal AG). Zur Herstellung der Trockenmischung wurden die Bestandteile in einem Hobartmischer trocken für 30 Sekunden vermischt. Zu dieser Trockenmischung wurden die in Tabelle 2 angegebenen Zusatzmittel, jeweils gelöst in 60 g Wasser gegeben. Es wurde für 30 Sekunden auf Stufe 1 weitergemischt, abschliessend wurde für 3.5 Minuten auf Stufe 2 weitergemischt.

An den erhaltenen Mörtel wurden das Ausbreitmass gemäss DIN EN 12350-5 gemessen. Ausserdem wurde die Trichterauslaufzeit gemäss DIN EN 12350-9 gemessen.

Der Luftgehalt wurde 30 Minuten nach dem Anmachen gemäss Norm DIN EN 12350-7 ermittelt.

Die folgende Tabelle gibt einen Überblick über die Ergebnisse.

**Tabelle 2: Ergebnisse der Mörtelprüfungen**

| **Versuch** | **Zusatzmittel*** | **Ausbreit mass [mm]** | **Trichterauslaufzeit [s]** | **Luftgehalt [%]** |
|---|---|---|---|---|
| V-1 | 3% R-1 | 165 | 215 | 1.6 |
| E-1 | 3% C-1 | 162 | 150 | 1.2 |
| E-2 | 3% C-1 | 162 | 142 | 4.4 |
| | 1% LP | | | |

| | | | | |
|---|---|---|---|---|
| * Dosierung in Gew.-% relativ zum Trockengewicht des Zementes LP: Luftporenbildner bestehend aus 1 Gew.-% Aluminiumpulver (Partikelgrösse D50 = 5 µm, Siebrückstand bei 45 µm von < 0.1 Gew.-%), 0.5 Gew.-% destilliertes Tallöl, 98.5 Gew.-% Calciumcarbonat-Pulver. | | | | |

## Patentansprüche

1. Verwendung von Copolymeren als Dispergiermittel für mineralische Bindemittel, wobei die Copolymere aufgebaut sind aus
(1) mindestens einem olefinisch ungesättigten Carbonsäure-Monomer
(2) mindestens einem olefinisch ungesättigten Makromonomer der allgemeinen Struktur (I) 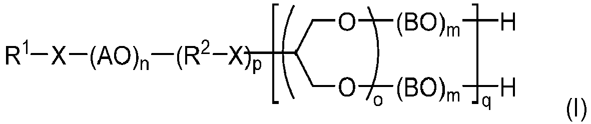
wobei R¹ ein olefinisch ungesättigter Rest mit 2 - 10 C-Atomen, welcher ggf. durch Sauerstoff und/oder Stickstoff substituiert sein kann, bevorzugt Vinyl, Allyl, Methallyl, Vinyloxybutyl, Isoprenyl, Acryloyl und/oder Methacryloyl, ist,
X = O oder NH ist,
A jeweils unabhängig voneinander C1-C10 Alkylen, bevorzugt Ethylen, Propylen und/oder Butylen sind,
R² = C1-C16 Alkyl ist,
B jeweils unabhängig voneinander C1-C10 Alkylen, bevorzugt Ethylen, Propylen und/oder Butylen sind,
m jeweils unabhängig voneinander eine ganze Zahl im Bereich von 0 - 350, bevorzugt 2 - 200, besonders bevorzugt 5 - 150, im Speziellen 7 - 30 sind,
n eine ganze Zahl im Bereich von 0 - 100, bevorzugt 1 - 100, besonders bevorzugt 2 - 75, ganz besonders bevorzugt 5 - 55 ist,
p gleich 0 oder 1, bevorzugt 0 ist,
o eine ganze Zahl im Bereich von 1 - 50, bevorzugt 3 - 40, besonders bevorzugt 6 - 30, im Speziellen 8 - 20 ist, und
q eine ganze Zahl im Bereich von 1 - 10 ist.

2. Verwendung von Copolymeren gemäss Anspruch 1, **dadurch gekennzeichnet, dass** das mindestens eine ungesättigte Carbonsäure-Monomer ein Monomer der allgemeinen Strukturen (IIa) oder (IIb) ist 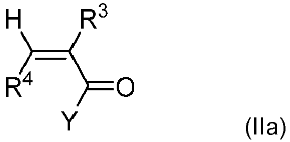
wobei R³ = H oder eine C1-C6-Alkylkette ist,
R⁴ = H, C(O)Y, oder eine C1-C6-Alkylkette ist, bevorzugt H ist, und
Y = OM, mit M ausgewählt aus H, Alkalimetallen, Erdalkalimetallen oder organischem Ammonium, oder Y = NR⁴R⁵, mit R⁴ und R⁵ unabhängig voneinander gleich H oder eine C1-C6-Alkylkette, ist; 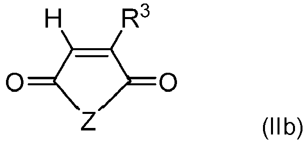 wobei Z = O oder NR⁵ ist und R³ die vorstehenden Bedeutungen hat, und R⁵ = H oder eine C1-C6-Alkylkette ist.

3. Verwendung von Copolymeren gemäss Anspruch 1 oder 2, **dadurch gekennzeichnet, dass** in der allgemeinen Struktur (I)
R¹ ein olefinisch ungesättigter Rest mit 2 - 10 C-Atomen, welcher ggf. durch Sauerstoff und/oder Stickstoff substituiert sein kann, bevorzugt Vinyl, Allyl, Methallyl, Vinyloxybutyl, Isoprenyl, Acryloyl und/oder Methacryloyl, ist,
X = O ist,
A jeweils unabhängig voneinander C1-C10 Alkylen, bevorzugt Ethylen sind,
B jeweils unabhängig voneinander C1-C10 Alkylen, bevorzugt Ethylen sind,
p = 0 ist,
m jeweils unabhängig voneinander eine ganze Zahl im Bereich von 5 - 150 sind,
n eine ganze Zahl im Bereich von 5 - 55 ist,
o eine ganze Zahl im Bereich von 8 - 50 ist, und
q eine ganze Zahl im Bereich von 1 - 10 ist.

4. Verwendung von Copolymeren gemäss einem der vorhergehenden Ansprüche, **dadurch gekennzeichnet, dass** der Anteil an Ethylenoxid-Einheiten in den Polyalkylenoxid-Ketten (AO)ₘ und (BO)ₘ, bezogen auf sämtliche vorhandenen Alkylenoxid-Einheiten AO und BO, mehr als 90 Mol-%, insbesondere mehr als 95 Mol-%, bevorzugt mehr als 98 Mol-%, im Speziellen 100 Mol-% beträgt.

5. Verwendung von Copolymeren gemäss einem der vorhergehenden Ansprüche, **dadurch gekennzeichnet, dass** das molare Verhältnis des mindestens einen olefinisch ungesättigten Carbonsäure-Monomers zu dem mindestens einen olefinisch ungesättigten Makromonomer der allgemeinen Struktur (I) im Bereich von 0.3 - 30, bevorzugt 0.6 - 10, besonders bevorzugt 1 - 4.5, insbesondere 1 - 3 liegt.

6. Verwendung von Copolymeren gemäss einem der vorhergehenden Ansprüche, **dadurch gekennzeichnet, dass** die Copolymere weitere Monomere **M** umfassen, welche ausgewählt sind aus der Gruppe umfassend Styrol, Ethylen, Propylen, Butylen, Butadien, Isopren, Vinylacetat, Vinylchlorid, Acrylonitril, N-Vinylpyrrolidon, Hydroxyalkyl(meth)acrylaten und/oder Monomeren der allgemeinen Strukturen (VI) 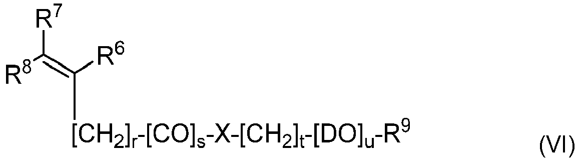 wobei
R⁶, jeweils unabhängig voneinander H, -CH₂-COOM oder eine Alkylgruppe mit 1 bis 5 Kohlenstoffatomen, bevorzugt H oder -CH₃, ist,
R⁷, jeweils unabhängig voneinander H oder eine Alkylgruppe mit 1 bis 5 Kohlenstoffatomen, bevorzugt H, ist,
R⁸, jeweils unabhängig voneinander H, -COOM oder eine Alkylgruppe mit 1 bis 5 Kohlenstoffatomen, bevorzugt H, ist,
r = 0, 1 oder 2 ist,
s = 0 oder 1 ist,
t = 0, oder eine ganze Zahl von 1 bis 4 ist,
u = 2 - 250, insbesondere 10 - 200 ist,
X, jeweils unabhängig voneinander -O- oder -NH- ist,
R⁹, jeweils unabhängig voneinander H, eine C₁- bis C₂₀-Alkylgruppe,-Cyclohexylgruppe oder -Alkylarylgruppe ist, und
D = C₂- bis C₄-Alkylen, bevorzugt Ethylen ist.

7. Verwendung von Copolymeren gemäss einem der vorhergehenden Ansprüche, **dadurch gekennzeichnet, dass** das olefinisch ungesättigte Monomer der allgemeinen Struktur (I) eine mittlere Molmasse Mw der Copolymere im Bereich von 1'000 - 1'000'000, besonders bevorzugt 1'500 - 500'000, ganz besonders bevorzugt 2'000 - 100'000, insbesondere 3'000 - 75'000 oder 3'000 - 50'000 hat.

8. Verwendung gemäss einem der vorhergehenden Ansprüche, **dadurch gekennzeichnet, dass** das mineralische Bindemittel ausgewählt ist aus der Gruppe umfassend Zement, insbesondere Portlandzement und Aluminatzement, α-Calciumsulfathemihydrat, β-Calciumsulfathemihydrat, Anhydrit, Kalk, industrielle und synthetische Schlacken, insbesondere Hochofenschlacken, Hüttensand, Hüttensandmehl, elektrothermische Phosphorschlacke, Kupferschlacke und Edelstahlschlacke, Puzzolane, insbesondere Flugaschen, Mikrosilika, Metakaolin, natürlich Puzzolane, insbesondere Tuff, Trass und Vulkansche, natürliche und synthetische Zeolithe, gebrannten Ölschiefer sowie Mischungen davon.

9. Verwendung gemäss einem der vorhergehenden Ansprüche, **dadurch gekennzeichnet, dass** das Copolymere in einer Menge von 0.01 - 10 Gew.-%, bevorzugt 0.05 - 7 Gew.-%, besonders bevorzugt 0.1 - 5 Gew.-%, ganz besonders bevorzugt 0.2 - 3 Gew.-%, insbesondere 0.2 - 1 Gew.-%, jeweils bezogen auf den Gehalt an mineralischen Bindemittel, vorhanden ist.

10. Mehrstufiger Prozess zur Herstellung eines Copolymer zur Verwendung gemäss Anspruch 1, umfassend die Schritte
1) Umsetzung eines Alkohols oder Amins R¹-XH mit Alkylenoxid und/oder einem halogenierten Alkohol oder Amin Hal-R²-XH, wobei R¹ ein olefinisch ungesättigter Rest mit 2 - 10 C-Atomen, welcher ggf. durch Sauerstoff und/oder Stickstoff substituiert sein kann, bevorzugt Vinyl, Allyl, Methallyl, Vinyloxybutyl, Isoprenyl, Acryloyl und/oder Methacryloyl, ist, X = O oder NH, Hal = Halogenid und R² = C₁ - C₁₆ Alkyl,
2) Umsetzung des Reaktionsproduktes aus Schritt 1) mit Glycidol oder Epichlorhydrin oder einer Mischung aus Glycidol und Alkylenoxid bzw. Epichlorhydrin und Alkylenoxid,
3) Umsetzung des Reaktionsproduktes aus Schritt 2) mit Alkylenoxid, und
4) radikalische Polymerisation eines Gemisches aus mindestens einem olefinisch ungesättigen Carbonsäure-Monomer mit dem Reaktionsproduktes aus Schritt 3).

11. Mehrstufiger Prozess gemäss Anspruch 10, **gekennzeichnet durch** einen weiteren Schritt
5) Trocknung, insbesondere Sprühtrocknung des Reaktionsproduktes aus Schritt 4).

12. Mineralisches Bindemittel oder mineralische Bindemittelzusammensetzung umfassend mindestens ein mineralisches Bindemittel, bevorzugt Zement, sowie mindestens ein Copolymer erhältlich aus einem Prozess gemäss Anspruch 10.

13. Mineralisches Bindemittel oder mineralische Bindemittelzusammensetzung gemäss Anspruch 12, umfassend 0.01 - 10 Gew.-%, bevorzugt 0.05 - 7 Gew.-%, besonders bevorzugt 0.1 - 5 Gew.-%, ganz besonders bevorzugt 0.2 - 2 Gew.-%, insbesondere 0.2 - 1 Gew.-%, jeweils bezogen auf den Gehalt an mineralischem Bindemittel, mindestens eines Copolymer erhältlich aus einem Prozess gemäss Anspruch 10.

14. Zusatzmittel für mineralische Bindemittelzusammensetzungen umfassend mindestens ein Copolymer erhältlich aus einem Prozess gemäss Anspruch 10.

15. Zusatzmittel gemäss Anspruch 14, weiterhin umfassend einen oder mehrere Polycarboxylatether.

16. Formkörper, erhältlich durch Aushärten eines mineralischen Bindemittels oder einer mineralischen Bindemittelzusammensetzung gemäss Anspruch 12.
